# DEMANDE DE BREVET EUROPEEN

(11) **EP 4 311 664 A1**
(43) Date de publication de la demande: **31.01.2024**
(21) Numéro de dépôt: 23187988.3
(22) Date de dépôt: 27.07.2023
(51) Int. Cl.: B32B 5/02, B32B 7/12, B32B 27/08, B32B 27/12, B32B 27/22, B32B 27/30

(54) **STRUCTURE MULTICOUCHE POUR LA REALISATION D'UN REVETEMENT DE SOL RENFORCE ET RECYCLABLE**

(30) Priorité: 29.07.2022 FR 2207915; 11.07.2023 FR 2307451
(71) Demandeur: GERFLOR, 69009 Lyon (FR)
(72) Inventeur: CINAUSERO, Nicolas, 69270 FONTAINES SAINT MARTIN (FR)
(74) Mandataire: Cabinet Laurent & Charras

(57) **Abrégé**

L'invention concerne une structure multicouche (1) pour la réalisation d'un revêtement de sol, comprenant au moins une couche de surface (2) liée à une couche d'envers (3), la couche de surface (2) et la couche d'envers (3) étant réalisées à partir de PVC ;
***caractérisée*** en ce que la structure multicouche (1) comprend une masse surfacique comprise entre 1500 et 2500 g/m², préférentiellement entre 1600 et 1900 g/m², et une armature tissée (5) liée à la couche de surface (2) et à la couche d'envers (3) par l'intermédiaire de couches de liaison (6) sous la forme de films thermofusibles ou copolyester, ou de couches de colle polyuréthane réticulée ;
**et *en ce que*** la couche d'envers (3) réalisées à partir de PVC comprend :
- une épaisseur comprise entre 150 µm et 600 µm, préférentiellement entre 150 et 300 µm;
- moins de 25 PCR de plastifiant.

## Description

### Domaine technique

L'invention se rapporte au domaine technique des revêtements de sol souple, présentés de préférence en rouleau ou sous forme de kit soudé et adhésivé.

L'invention concerne une structure multicouche pour la réalisation d'un revêtement de sol renforcé et recyclable.

L'invention trouve une application avantageuse pour revêtir les panneaux de planchers d'avion alvéolés par exemple.

### Art antérieur

Il est bien connu de l'art antérieur une structure multicouche pour la réalisation d'un revêtement de sol, comprenant une couche de surface liée à une couche d'envers dite « laminée » utilisée pour revêtir les planchers d'avion par exemple.

Dans ce type de structure, la couche d'envers laminée est constituée d'un renfort tissé en fibres de verre imprégné de résines phénoliques ou polyester. Cette couche d'envers permet d'assurer une tenue du revêtement de sol sur son support, de lui apporter de la stabilité dimensionnelle, de bloquer la migration des plastifiants provenant des couches de surface en PVC, et d'améliorer la résistance à l'impact du revêtement de sol.

La couche d'envers laminée est complexe à fabriquer et nécessite une certaine maîtrise technique, dont un nombre restreint de sociétés possède les compétences, ce qui implique un coût de réalisation élevé.

Un autre inconvénient de cette couche d'envers laminée et qu'elle n'est pas recyclable du fait de l'utilisation de résine phénolique. A ce jour, les chutes de production d'un revêtement de sol contenant ce type de couche sont plutôt mises au rebut.

Il est connu de l'art antérieur les documents US2010/0227132 et EP3064347 qui décrivent des structures multicouches pour la réalisation de revêtements de sol dans lesquelles une couche d'envers est composée d'un matériau composite comprenant des fibres de renfort tissées ou non tissées et d'une résine polymère thermodurcissable ou thermoplastique, choisie dans le groupe comprenant la résine polyester ; la résine phénolique ; la résine époxy ; le polysulfone ; la résine vinylester ; la résine époxy-acrylique ; et leurs mélanges.

L'inconvénient qui en résulte est que l'utilisation d'une résine thermodurcissable affecte la recyclabilité du revêtement de sol.

Remplacer la résine phénolique par une résine thermoplastique peut affecter également la recyclabilité, car la structure devient trop hétérogène. Au surplus les performances attendues de la structure multicouche ne sont pas atteintes, telle que la soudabilité entre deux structures ou la résistance au trafic par exemple.

### Exposé de l'invention

L'un des buts de l'invention est donc de pallier les inconvénients de l'art antérieur en proposant une structure multicouche, par exemple utilisée pour revêtir les planchers d'avion, présentant une couche d'envers dont le coût de fabrication est faible par rapport à celui des couches laminées, et de fournir une structure multicouche donnant entière satisfaction en termes de tenue du revêtement sur son support, de stabilité dimensionnelle, de résistance à l'impact du revêtement de sol.

Un autre objectif de l'invention est de fournir une telle structure multicouche dont la recyclabilité est améliorée.

À cet effet il a été mis au point une structure multicouche pour la réalisation d'un revêtement de sol, comprenant au moins une couche de surface liée à une couche d'envers, la couche de surface et la couche d'envers étant réalisées à partir de PVC.

Selon l'invention, la structure multicouche comprend une masse surfacique comprise entre 1500 et 2500 g/m², préférentiellement entre 1600 et 1900 g/m² et une armature tissée liée à la couche de surface et à la couche d'envers par l'intermédiaire de couches de liaison sous la forme de films thermofusibles (par exemple en copolyamide CoPA en thermoplastique polyuréthane TPU, ou de copolyester thermoplastique CoPES), ou de couche de colle polyuréthane réticulée, et la couche d'envers réalisée à partir de PVC comprend :
- une épaisseur comprise entre 150 µm et 600 µm, préférentiellement entre 150 et 300 µm ;
- moins de 25 PCR, préférentiellement moins de 15 PCR de plastifiant, voire entre 18 et 23 PCR.

La couche d'envers comprend de préférence plus de 5 PCR de plastifiant.

L'armature tissée améliore la rigidité et la stabilité dimensionnelle de la structure multicouche.

La quantité de plastifiant est directement liée à la quantité d'ignifugeant nécessaire dans la composition puisque les plastifiants sont des composés inflammables. Limiter ainsi la quantité de plastifiant à 25 PCR, préférentiellement à 15 PCR, permet de limiter la quantité d'ignifugeant, de limiter la migration des plastifiants dans les adhésifs double faces généralement utilisés pour lier la structure multicouche à un plancher alvéolé d'un avion par exemple, et par conséquent permet d'éviter de dégrader les propriétés d'adhérence de ces adhésifs au cours du temps. Avantageusement, la quantité de plastifiant de la couche d'envers est supérieure à 5 PCR, préférentiellement comprise entre 18 et 23 PCR afin d'obtenir une couche suffisamment souple sans pour autant dégrader les performances au feu ainsi que le comportement à la soudure du produit. En effet, un faible taux de plastifiants conduit à avoir un film avec une faible stabilité dimensionnelle et une sensibilité à la chaleur, notamment une grande sensibilité aux procédés de soudure à chaud.

La structure multicouche selon l'invention présente ainsi une couche d'envers, permettant d'obtenir un revêtement de sol dont le coût de fabrication est relativement faible, et qui donne entière satisfaction en termes de tenue du revêtement sur son support, de stabilité dimensionnelle, et de résistance à l'impact. Étant donné que la couche de surface et la couche d'envers sont toutes les deux réalisées à partir de PVC, la recyclabilité de la structure multicouche devient envisageable.

De préférence, la couche d'envers réalisée à partir de PVC présente une résistance à la flexion, mesurée selon la norme ISO 2493-2, comprise entre 0,10 mN.m et 30 mN.m, préférentiellement entre 0,1 et 2,0 mN.m, plus préférentiellement entre 0,1 et 1,0 mN.m

De préférence, la couche d'envers comprend une épaisseur comprise entre 150 µm et 300 µm, préférentiellement entre 170 µm et 250 µm afin de limiter le poids de l'ensemble de la structure et sa maniabilité.

De préférence, la couche d'envers comprend 2% ou moins d'agent ignifugeant.

Selon une forme de réalisation particulière, la couche de surface comprend une couche supérieure, notamment d'usure, et une ou plusieurs couches intermédiaires en PVC plastifié.

Par exemple, la couche supérieure est transparente, et une première couche intermédiaire directement disposée sous la couche de surface se présente par exemple sous la forme d'un film imprimé d'un décor. Dans ce dernier cas, une seconde couche intermédiaire est de préférence disposée sous le film imprimé pour assurer une opacité suffisante.

Selon une forme de réalisation particulière, l'armature tissée est imprégnée d'un polymère thermoplastique ou thermodurcissable dans une quantité comprise entre 1 % et 10 % en poids de l'armature tissée imprégnée pour ne pas dégrader la recyclabilité. Ceci permet à la structure multicouche de présenter une plus grande rigidité. Le polymère thermoplastique ou thermodurcissable peut être choisi dans le groupe comprenant la résine polyuréthane, la résine polyester, la résine phénolique, la résine époxy, le polysulfone, la résine vinylester, la résine époxy-acrylique, et leurs mélanges.

De préférence et pour améliorer la résistance au phénomène connue de l'homme du métier sous le terme anglais « telegraphing », une couche de non tissé, comprenant avantageusement des fibres d'aramide pour conférer des propriétés anti feu, est liée à une face inférieure de la couche d'envers par l'intermédiaire d'une couche de liaison (6) sous forme d'une couche de polyuréthane réticulé PUR, ou d'une couche de copolyester thermoplastique CoPES.

Avantageusement, et pour faciliter la pose de la structure multicouche selon l'invention, la structure multicouche comprend sur une face inférieure destinée à être en regard du sol, c'est-à-dire directement sur la face inférieure de la couche d'envers, ou bien en face inférieure de la couche de non-tissé, une couche d'adhésif repositionnable, c'est-à-dire qui présente un pouvoir d'adhérence à la structure multicouche supérieure au pouvoir d'adhérence au sol pour pouvoir décoller et repositionner la structure multicouche.

L'invention concerne également un avion ou aéronef dont les planchers sont revêtus au moins en partie par ladite structure multicouche.

### Brève description des dessins

[Fig. 1] illustre en coupe une structure multicouche selon un premier mode de réalisation de l'invention, avec une couche supérieure, une couche intermédiaire, une armature tissée, et une couche d'envers.
[Fig. 2] est une vue similaire à celle de la figure 1, avec deux couches intermédiaires.
[Fig. 3] est une vue similaire à celle de la figure 2, avec en plus un non-tissé sur la face inférieure de la couche d'envers et un adhésif repositionnable en regard du sol.

### Description détaillée de l'invention

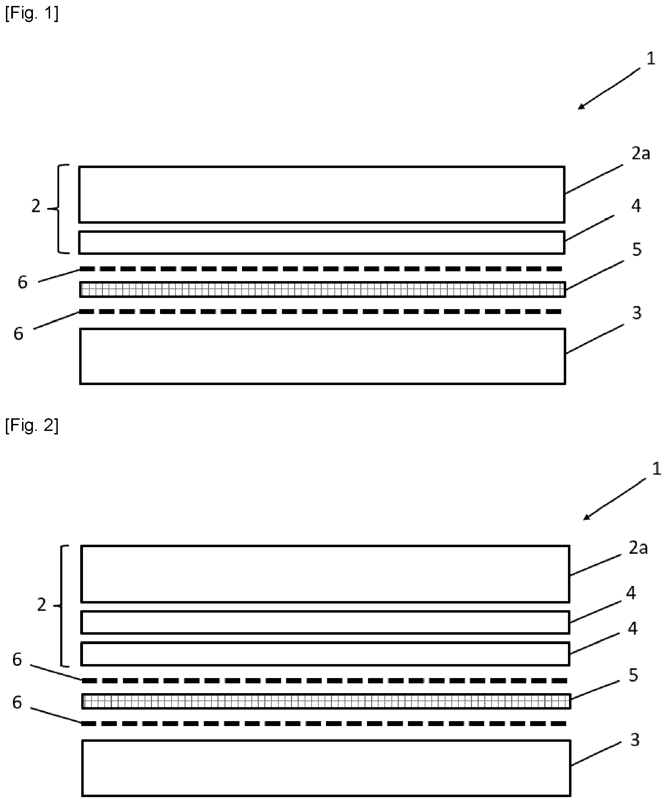

En référence aux figures 1 à 3, l'invention concerne une structure multicouche (1) pour la réalisation d'un revêtement de sol, de préférence pour recouvrir des planchers d'avion, par exemple alvéolés, sans que cela ne soit limitatif.

La structure multicouche (1) selon l'invention présente un coût de fabrication faible, tout en possédant des performances optimales, c'est-à-dire en termes de tenue du revêtement sur son support, de stabilité dimensionnelle, de résistance à l'impact du revêtement de sol, de recyclabilité.

À cet effet, la structure multicouche (1) selon l'invention comprend au moins une couche de surface (2) réalisée à partir de PVC, liée à une couche d'envers (3), elle aussi réalisée à partir de PVC.

Selon l'invention, la structure multicouche (1) comprend une masse surfacique comprise entre 1500 et 2500 g/m², de préférence entre 1600 et 1900 g/m², et une armature tissée (5) liée à la couche de surface (2) et à la couche d'envers (3) par l'intermédiaire de couches de liaison (6) sous la forme de films thermofusibles ou copolyester, ou de couches de colle polyuréthane réticulée.

La couche d'envers (3) réalisée à partir de PVC comprend :
- une épaisseur comprise entre 150 µm et 600 µm, de préférence entre 200 µm et 500 µm, voire entre 150 et 300 µm afin de limiter le poids de l'ensemble de la structure (1);
- une quantité de plastifiant inférieure à 25 PCR, voire inférieure à 15 PCR, préférentiellement supérieure à 5 PCR pour obtenir une stabilité dimensionnelle suffisante lors des procédés de thermosoudure , « PCR » signifiant part(s) pour cent de résine, le terme « résine » se rapportant au PVC de la couche d'envers (3) ;
- de préférence une résistance à la flexion, notamment la flexion B des films PVC mesurée selon la norme ISO 2493-2 sur un banc d'essai « Taber Stiffness » de la société « Taber Industries », modèle « TABER 150-E », comprise entre 0,1 mN.m et 30 mN .m ; entre 0,1 et 2,0 mN.m, de préférence entre 0,1 mN.m et 1,0 mN.m;
- de préférence une quantité d'agent ignifugeant, par exemple de l'antimoine, inférieure ou égale à 2% (en poids de la couche d'envers en PVC).

La couche d'envers (3) peut ne pas contenir de charges ou éventuellement comprendre une quantité de charges comprises entre 1 et 50 PCR. Les charges peuvent être choisies dans le groupe comprenant le carbonate de calcium, les craies, le kaolin, le talc, la silice. La couche d'envers (3) peut en outre contenir au moins un additif choisi dans le groupe suivant : stabilisants thermiques, agents dessicants, lubrifiants, agents de mise en oeuvre (« processing aids »), pigments, ignifugeants.

Une quantité limitée de plastifiant permet de limiter la quantité d'agent ignifugeant, de limiter la migration des plastifiants dans les adhésifs double-face qui sont généralement utilisés pour lier la structure multicouche (1) à un sol, de sorte à éviter de dégrader les propriétés d'adhérence desdits adhésifs au cours du temps. Avantageusement, la quantité de plastifiant de la couche d'envers (3) est comprise entre 18 et 23 PCR afin d'obtenir une couche (3) suffisamment souple sans pour autant dégrader les performances d'adhésion de la structure multicouche (1) avec les adhésifs double faces généralement utilisés pour lier la structure multicouche (1) à un plancher alvéolé d'un avion par exemple

La résistance à la flexion est testée selon le sens machine, la résistance à la flexion est déterminée comme étant le moment de flexion moyen de 10 valeurs mesurées, à savoir 5 mouvements de flexion dans un sens et 5 mouvements de flexion dans un sens opposé. Une résistance à la flexion comprise entre 0,1 mN.m et 2 mN.m permet d'apporter une rigidité suffisante à la structure.

La couche de surface (2) peut comprendre une couche supérieure (2a), notamment d'usure, et une, voir figure 1, ou plusieurs, voir figure 2, couches intermédiaires (4) en PVC plastifié, par exemple avec une quantité de plastifiant supérieure à 15 PCR, préférentiellement inférieure à 40 PCR. Chaque couche intermédiaires (4) peut ne pas contenir de charges ou éventuellement comprendre une quantité de charges comprises entre 1 et 150 PCR. Les charges peuvent être choisies dans le groupe comprenant le carbonate de calcium, les craies, le kaolin, le talc, la silice. Chaque couche intermédiaires (4) peut en outre contenir au moins un additif choisi dans le groupe suivant : stabilisants thermiques, agents dessicants, lubrifiants, agents de mise en oeuvre (« processing aids »), pigments, ignifugeants

La couche supérieure (2a) et les couches intermédiaires (4) sont rendues solidaires par exemple par complexage, c'est-à-dire par lamination à chaud. Par exemple, la couche supérieure (2a) présente une épaisseur comprise entre 0,35mm et 0,55mmn, et la couche intermédiaire (4) présente une épaisseur comprise entre 0,15 mm et 0,60mm.

La couche supérieure (2a) est plastifiée et éventuellement chargée, et peut éventuellement présenter un vernis de surface bien connu de l'homme du métier, pour assurer une facilité d'entretien.

Selon une forme de réalisation particulière, la couche supérieure (2a) est transparente à la lumière du domaine du visible pour l'œil humain et la couche intermédiaire (4), directement disposée sous la couche supérieure (2a), peut se présenter par exemple sous la forme d'un film imprimé d'un décor sur sa face en regard de la couche supérieure (2). Dans ce dernier cas, il est préférable de disposer une deuxième couche intermédiaire (4) qui est positionnée sous le film imprimé pour assurer une opacité suffisante au décor et éviter de voir la structure de l'armature tissée (5). Alternativement, un décor peut être directement imprimé en envers de la couche supérieure (2), au regard de la couche intercalaire (4).

L'armature tissée (5) permet d'assurer la stabilité dimensionnelle de la structure multicouche (1), et se présente par exemple sous la forme d'un tissu de verre.

Du fait de l'absence d'affinité de l'armature tissée (5) avec le PVC, ladite armature tissée (5) est liée à la couche de surface (2) et à la couche d'envers (3) par l'intermédiaire de couches de liaison (6), par exemple sous la forme de films thermofusibles, (par exemple, en copolyamide CoPA en thermoplastique polyuréthane TPU, ou en copolyester thermoplastique ou CoPES), de couches de polyuréthane réticulé PUR, appliquée sous forme de colle bien connue par l'homme du métier selon la désignation anglaise « hotmelt ».

L'armature (5) est préférentiellement tissée selon une armure toile, sans que cela ne soit limitatif. Il pourrait tout à fait être envisagé une armure tissée en sergé ou satin.

L'armature tissée (5) est de préférence réalisée à partir de fibres de verre, de fibres de polyamide ou de fibres de polyester.

Les fibres de verre peuvent présenter un titrage compris entre 22 Tex et 68 Tex. Les fibres de polyester peuvent présenter un titrage de l'ordre de 1100 décitex. Les fibres de polyamide peuvent présenter un titrage compris entre 44 décitex et 78 décitex. L'armature tissée (5) présente généralement une épaisseur comprise entre 150 µm et 300 µm, préférentiellement entre 165 µm et 205 µm. L'armature tissée (5) présente une masse surfacique comprise entre 150 et 300 g/m², bien que cette valeur dépende de la nature des fibres utilisées.

Lorsque l'armature tissée (5) est réalisée à partir de fibre de verre, elle présente un nombre de fils de chaîne compris entre 17 et 18 fils par cm et un nombre de fils de trame compris entre 13,5 et 14 fils par cm.

En dessous de 17 fils de chaîne par cm ou de 13,5 fils de trame par cm, l'armature tissée (5) devient poreuse, notamment avec un titrage compris entre 22 et 68 Tex.

De préférence l'armature tissée (5) est imprégnée d'un polymère thermoplastique ou thermodurcissable dans une quantité comprise entre 1 % et 10 % en poids de l'armature tissé imprégnée pour ne pas dégrader la recyclabilité, obtenir une plus grande rigidité et limiter voire supprimer le traversage de colle susceptible d'encrasser la ligne de lamination au cours du procédé d'assemblage des couches.

L'armature tissée (5) peut comprendre des fils d'aramide pour conférer des propriétés antifeu.

Le polymère thermodurcissable ou thermoplastique peut être choisi dans le groupe comprenant la résine polyuréthane, la résine polyester, la résine phénolique, la résine époxy, le polysulfone, la résine vinylester, la résine époxy-acrylique, et leurs mélanges.

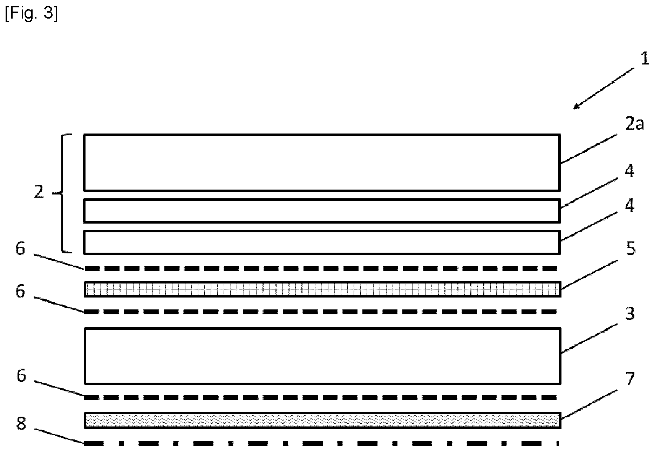

De préférence et en référence à la figure 3, et pour améliorer la résistance aux phénomènes connus de l'homme du métier sous les termes anglais « telegraphing » et de « buckling » ou « waving », une couche de textile non-tissé (7) est liée à une face inférieure de la couche d'envers (3) par l'intermédiaire d'une couche de liaison (6) sous la forme sous la forme de colle « hotmelt » par exemple en polyuréthane PUR ou copolyester « CoPES ».

La couche de textile non-tissé (7) présente avantageusement une masse surfacique comprise entre 100 g/m² et 350 g/m², préférentiellement entre 150 g/m² et 250 g/m², voire entre 100 et 150g/ m². Une masse surfacique au moins égal à 100 g/m² permet d'améliorer la résistance au « telegraphing » et de « buckling » (ou « waving »).

Une masse surfacique supérieure à 350 g/m² peut dégrader la résistance au poinçonnement de la structure multicouche (1) et trop augmenter son poids. Une masse surfacique inférieure à 100g/m² peut, au contraire, améliorer la résistance au poinçonnement mais dégrader les propriétés de résistance au « telegraphing ». De fait, une masse surfacique comprise entre 100 g/m² et 150 g/m², permet d'obtenir un bon compromis entre la résistance au « telegraphing » et la résistance au poinçonnement.

L'épaisseur de la couche de textile non-tissé (7) est comprise généralement entre 1,2 mm et 2,8 mm.

La couche de textile non-tissé (7) peut comprendre des fibres auto-extinguibles de manière à améliorer la résistance au feu de la structure multicouche (1) tout en améliorant les propriétés de résistance au « telegraphing » du revêtement de sol. Des fibres auto-extinguibles sont généralement des fibres présentant un indice limite d'oxygène (I.L.O) supérieur à 0,21 selon la norme NF EN ISO 4589-2/A1. Afin de présenter un indice limite d'oxygène supérieur à 0,21, la couche de textile non-tissé (7) peut notamment comprendre des fibres choisies parmi les fibres de polyétherimide, de polyester, de polyacrylate, d'aramide, de para-aramide, de polyacrylonytrile oxydé, de polyamide aromatique et leurs mélanges. La quantité de chaque type de fibre pourra aisément être adaptée par l'homme du métier pour atteindre une valeur d'indice limite d'oxygène supérieure à 0,21, notamment à partir des valeurs d'indice limite d'oxygène de chaque type de fibre utilisé dans la réalisation de la couche de textile non-tissé (7).

Avantageusement, la couche de textile non-tissé (7) présente un indice limite d'oxygène supérieur à 0,28 selon la norme NF EN ISO 4589-2/A1. Il a été constaté que des meilleurs résultats de résistance au feu de la structure multicouche (1) étaient obtenus avec une couche de textile non-tissé (7) présentant un indice limite d'oxygène supérieur à 0,28 selon la norme NF EN ISO 4589-2/A1. Cette valeur d'indice limite d'oxygène permet notamment d'obtenir un revêtement de sol selon l'invention pouvant répondre à la norme FAR 25.853 en termes de résistance au feu sans toutefois trop augmenter le prix de fabrication du revêtement de sol.

Avantageusement, la couche de textile non-tissé (7) présente un indice limite d'oxygène supérieur à 0,32 selon la norme NF EN ISO 4589-2/A1. Cette valeur d'indice limite d'oxygène permet notamment d'obtenir un revêtement de sol pouvant répondre à la norme FAR 25.853 en termes de résistance au feu.

Avantageusement, la couche de textile non-tissé (7) présente un indice limite d'oxygène inférieur à 0,42, préférentiellement inférieur à 0,40 selon la norme NF EN ISO 4589-2/A1. Bien que des valeurs d'indice limite d'oxygène supérieure à 0,40 soient envisageables, les matériaux permettant de les atteindre entrainent généralement un surcout du revêtement de sol. De façon préférentielle, la couche de textile non-tissé (7) présente un indice limite d'oxygène compris entre 0,28 et 0,42 et plus préférentiellement compris entre 0,32 et 0,40 afin d'obtenir un bon compromis entre le coût de fabrication et le comportement au feu du revêtement de sol.

De façon préférentielle, la couche de textile non-tissé (7) comprend des fibres choisies parmi les fibres de polyétherimide, de polyester, de polyacrylate, d'aramide, de para-aramide, de polyacrylonytrile oxydé, de polyamide aromatique, et leurs mélanges.

Afin d'améliorer les propriétés de résistance au « telegraphing » du revêtement de sol tout en conservant de bonnes propriétés de résistance au feu et en limitant les coûts de fabrication, la couche de textile non-tissé (7) peut être réalisée à partir d'un mélange de fibres de polyester et de fibres de polyétherimide, d'un mélange de fibres de polyester et de fibres d'aramide, d'un mélange de fibres de polyacrylate et de fibres d'aramide, d'un mélange de fibres de polyester et de fibres d'aramide, ou d'un mélange de fibres de polyacrylonytrile oxydé et de fibres de para-aramide.

De préférence et en référence à la figure 1 à 3, la structure multicouche (1) comprend sur une face inférieure destinée à être en contact avec le sol, c'est-à-dire par exemple directement la face inférieure la couche d'envers (3), ou bien la face inférieure de la couche textile non-tissé, un adhésif double-face repositionnable (8), c'est-à-dire qui adhère plus à la structure multicouche (1) qu'au sol sur lequel il est posé, pour ainsi faciliter la pose.

Le Demandeur a procédé à des tests sur :
- un produit de référence, conforme à l'art antérieur avec une couche d'envers laminée ;
- un produit A selon l'invention
- un produit A' selon l'invention ;
- un produit B, non conforme à l'invention.

Les produits A, A' et B possèdent la même structure, à l'exception de la couche d'envers (3) qui sont différentes et dont les caractéristiques sont détaillées dans le tableau ci-après.

Les produits A, A' et B possèdent tous les deux :
- une couche supérieure (2a) en PVC de 0,50 mm d'épaisseur, de 640 g/m² ;
- une couche intermédiaire (4) en PVC de 0,50 mm d'épaisseur, de 640 g/m² ;
- une couche de liaison (6) sous la forme d'un film thermofusible d'épaisseur 0,045 mm, de 50g/m² ;
- une armature tissée (5) imprégnée d'épaisseur 0,15mm et de 223g/m² ;
- une couche de liaison (6) sous la forme d'un film thermofusible d'épaisseur 0,045 mm, de 50g/m² ;
- une couche d'envers (3).

**Tableau 1 :**

| | Normes | Exigences | Référence : Art Antérieur - envers laminé | Couche d'envers Produit A | Couche d'envers Produit A' | Couche d'envers produit B |
|---|---|---|---|---|---|---|
| Oxyde d'antimoine | - | - | 0 | 0% | 0% | 2% |
| Type de plastifiant | - | - | 0 | - | DIDP- | DIDP / DPO |
| Taux de plastifiant | - | - | - | 0 PCR | 21PCR | 37 PCR (DIDP:21 / DPO:16) |
| Epaisseur envers PVC (µm) | - | - | - | 220 µm | 200 µm | 240 µm |
| Masse PF (théorique) | - | 1720 - 1750 | 1720 g/m² | 1720 g/m² | 1720 g/m² | 1720 g/m² |
| FAR 25.853 (test avec adhésif, sans liner) | AITM 2.0002B à 12 sec | < 15 s | OK | 1s | 1s | 1s |
| Adhésion tissu - PVC - 3J@23°C | 180° pelage à 50mm/min | >13 | OK | 38 N/25mm | 19 N/25mm | 26 N/25mm |
| Adhésion tissu - PVC - 7J@70°C | 180° pelage à 50mm/min | >13 | OK | 33 N/25mm | Non-testé | 21 N/25mm |
| Adhésion envers / adh. 3M950 - 3J@23°C | ISO 4578 | ≥ REF | 15 N/25mm | 19 N/25mm | 19 N/25mm | 47 N/25mm |
| Adhésion envers / adh. 3M950 - 7J@70°C | ISO 4578 | > 20 | 37 N/25mm | 30 N/25mm | 31 N/25mm | 14 N/25mm |
| Résistance à la flexion (moment de flexion) de la couche d'envers PVC (3) | ISO-2493-2 | | - | 1,4 mN.m | 0,3 mN.m | 0,1 mN.m |
| Compatibilité procédé de thermosoudure en envers | - | Aspect conforme | Conforme | Non conforme | Conforme | Non testé |

Dans ce tableau nous constatons que le produit B testé, non couvert par l'invention, à savoir avec un envers PVC plastifié et ignifugé notamment en comprenant 37PCR de plastifiants, ne convient pas car il ne permet pas de satisfaire le test d'adhésion selon la norme ISO4578.

Notamment, la couche d'envers collée sur un support avec un adhésif acrylique du marché vendu par la société 3M sous la Marque déposée 3M^{®} référence 950, ne satisfait pas le test d'adhésion cela la norme ISO 45 78 qui prévoit que la couche doit se désolidariser avec une force supérieure à 20 N/25mm, alors que le Produit B se désolidarise avec une force de 14 N/25mm.

Le produit de référence, à savoir le produit avec envers laminé, le produit A selon l'invention avec envers PVC rigide dépourvu de plastifiant, ainsi que le produit A' selon l'invention avec envers PVC peu plastifié, satisfont tous les deux les tests d'adhésion au support réalisés selon la norme ISO 4578, avec le même adhésif (3M950).

Les produits A et A' satisfont également les tests d'adhésion entre la couche d'envers (3) en PVC et l'armature tissée (5), ainsi que les tests au feu selon la norme FAR 25.853.

Le produit A qui répond à l'ensemble des tests (mécaniques, feu, etc.) n'est cependant pas compatible avec le procédé de thermosoudure à chaud, car le produit se déforme sous l'action de la chaleur à cause de la sensibilité thermique de la couche d'envers (3) déplastifiée (0 PCR de plastifiant).

Il ressort de ce qui précède que la structure multicouche selon l'invention présente une couche d'envers dont le coût de fabrication est faible par rapport à celui des couches laminées, laquelle structure multitouche donne entière satisfaction en termes de tenue du revêtement sur son support, de stabilité dimensionnelle, de résistance à l'impact du revêtement de sol, tout en présentant une recyclabilité améliorée.

## Revendications

1. Structure multicouche (1) pour la réalisation d'un revêtement de sol, comprenant au moins une couche de surface (2) liée à une couche d'envers (3), la couche de surface (2) et la couche d'envers (3) étant réalisées à partir de PVC ; ***caractérisée* en ce que** la structure multicouche (1) comprend une masse surfacique comprise entre 1500 et 2500 g/m², préférentiellement entre 1600 et 1900 g/m², et une armature tissée (5) liée à la couche de surface (2) et à la couche d'envers (3) par l'intermédiaire de couches de liaison (6) sous la forme de films thermofusibles ou copolyester, ou de couches de colle polyuréthane réticulée ; ***et en ce que*** la couche d'envers (3) réalisées à partir de PVC comprend :
- une épaisseur comprise entre 150 µm et 600 µm, , préférentiellement entre 150 et 300 µm ;
- moins de 25 PCR de plastifiant, préférentiellement moins de 15 PCR.

2. Structure multicouche (1) selon la revendication 1, ***caractérisée* en ce que** la couche d'envers (3) réalisée à partir de PVC comprend une résistance à la flexion mesurée selon la norme ISO 2493-2 comprise entre 0,1 mN.m et 30 mN.m, préférentiellement entre 0,1 et 2mN.m, plus préférentiellement entre 0,1 et 1mN.m

3. Structure multicouche (1) selon l'une des revendications précédentes, ***caractérisée* en ce que** la couche d'envers (3) comprend une épaisseur comprise entre 150 µm et 300 µm, préférentiellement entre 170 µm et 250 µm.

4. Structure multicouche (1) selon l'une des revendications précédentes, ***caractérisée* en ce que** la couche d'envers (3) comprend 2% ou moins d'agents ignifugeant.

5. Structure multicouche (1) selon l'une des revendications précédentes, ***caractérisée* en ce que** la couche de surface (2) comprend une couche supérieure (2a) et une ou plusieurs couches intermédiaires (4) en PVC plastifié.

6. Structure multicouche (1) selon la revendication 4, ***caractérisée* en ce que** la couche supérieure (2a) est transparente et la couche intermédiaire (4) qui est directement disposée sous la couche supérieure (2) est un film imprimé d'un décor.

7. Structure multicouche (1) selon l'une des revendications précédentes, ***caractérisée* en ce que** l'armature tissée (5) est imprégnée d'un polymère thermoplastique ou thermodurcissable dans une quantité comprise entre 1 % et 10 % en poids de l'armature tissé imprégnée.

8. Structure multicouche (1) selon l'une des revendications précédentes, ***caractérisée* en ce qu'**une couche de textile non-tissé (7) est liée à une face inférieure de la couche d'envers (3) par l'intermédiaire d'une couche de liaison (6) sous la forme de polyuréthane réticulé ou d'une couche de copolyester thermoplastique.

9. Structure multicouche (1) selon la revendication 7, ***caractérisée* en ce que** la couche de textile non-tissé (7) comprend des fibres d'aramide.

10. Structure multicouche (1) selon l'une des revendications précédentes, ***caractérisée* en ce qu'**elle comprend sur une face inférieure destinée à être en regard du sol, une couche d'adhésif double-face repositionnable (8).
